Europäisches Patentamt

European Patent Office

Office européen des brevets

(11) Veröffentlichungsnummer: **0 270 948 B1**

(12) **EUROPÄISCHE PATENTSCHRIFT**

(45) Veröffentlichungstag der Patentschrift: **17.02.93**

(21) Anmeldenummer: **87117550.1**

(22) Anmeldetag: **27.11.87**

(51) Int. Cl.⁵: **C08F 6/22**, C08F 291/02

(54) **Verfahren zur Herstellung von Pfropfpolymerisaten in Pulverform.**

(30) Priorität: **09.12.86 DE 3641991**

(43) Veröffentlichungstag der Anmeldung:
**15.06.88 Patentblatt 88/24**

(45) Bekanntmachung des Hinweises auf die
Patenterteilung:
**17.02.93 Patentblatt 93/07**

(84) Benannte Vertragsstaaten:
**DE FR GB IT**

(56) Entgegenhaltungen:
**EP-A- 0 137 268**
**EP-A- 0 184 851**
**EP-A- 0 217 006**

**CHEMICAL ABSTRACTS, Band 97, 1982, Seite 32, Zusammenfassung Nr. 110817g, Columbus, Ohio, US**

(73) Patentinhaber: **BAYER AG**

**W-5090 Leverkusen 1 Bayerwerk(DE)**

(72) Erfinder: **Lindner, Christian, Dr.**
**Riehlerstrasse 200**
**W-5000 Koeln 60(DE)**
Erfinder: **Morbitzer, Leo, Dr.**
**Rungestrasse 50**
**W-5000 Koeln 80(DE)**
Erfinder: **Koch, Otto, Dr.**
**Morgengraben 12**
**W-5000 Koeln 80(DE)**
Erfinder: **Wittmann, Dieter, Dr.**
**Doerperhofstrasse 15**
**W-4150 Krefeld(DE)**
Erfinder: **Kress, Hans-Jürgen, Dr.**
**c/o Mobay Corp. Plastic and Rubber Division**
**Mobay Road Pittsburgh, PA 15205(US)**

**Beschreibung**

Die Erfindung betrifft ein verbessertes Verfahren zur Herstellung von thermoplastischen Pfropfpolymerisaten in Pulverform, das Vorteile in Hinsicht Filtrierbarkeit, Entwässerung- und Trocknung aufweist, und Pulver mit verbesserten Eigenschaften wie Rieselfähigkeit, Korngrößenverteilung, Schüttdichte und Lagerbeständigkeit ergibt.

Pfropfpolymerisate, z.B. die bekannten Acrylnitril-Butadien-Styrol Co- und Pfropfcopolymerisate (ABS), Methylmethacylat-Butadien-Styrol Co- und Pfropfcopolymerisate (MBS) und Acrylnitril-Styrol-Acrylatkautschuk Pfropfcopolymere (ASA) sind Bestandteile thermoplastischer Formmassen oder stellen selbst solche Massen dar. Ihre Kautschukgehalte sind variabel; sie können mit verschiedenartigen thermoplastischen Polymerisaten (Harzen) modifiziert werden. Pfropfpolymerisate mit besonderer teilchenförmiger Struktur werden durch Emulsionspolymerisation hergestellt. Diese Struktur ist durch andere Polymerisationsverfahren praktisch nicht erhältlich. Aufgrund dieser besonderen Struktur können sie z.B. zur Modifizierung von Polyvinylchlorid, Polyamid oder Polycarbonat oftmals in Kombination mit weiteren Harzen verwendet werden, da diese Kombination die Herstellung spezieller Formmassen erlaubt. Zur Herstellung dieser Formmassen sind Polymerkomponenten in Pulverform technisch vorteilhaft.

Die Herstellung solcher Pulver erfordert viele Stufen, mit Filtrations-, Koagulation-, Reinigungs- und Entwässerungsschritten. Es ist erforderlich, die Herstellung solcher Pulver zu verbessern, beispielsweise die Entwässerungsgeschwindigkeit zu erhöhen mit dem Ziel wirtschaftlicher zu arbeiten und Pulver mit besseren physikalischen Eigenschaften zu erhalten. (Man kann mit kürzeren Trocknungscyclen arbeiten und so Schädigung der Polymerisate vermindern). Polymerkomponenten in Pulverform müssen auch gute Lagerbeständigkeit und Rieselfähigkeit aufweisen, damit sie industriell kontinuierlich dosiert, transportiert und verarbeitet werden können. Die Aufarbeitung der Polymeremulsion zu Pfropfpolymerisatpulvern bestimmt unter anderem einerseits auch deren Reinheitsgrad (z.B. Grad der Verunreinigung durch Polymerisationshilfsstoffen und Aufarbeitungshilfsstoffen); der Reinheitsgrad ist aber häufig ausschlaggebend für die physikalischen Eigenschaften des Materials. Da die hier betrachteten Pfropfpolymerisate vernetzt sind, können sich auch bei ihrer Weiterverarbeitung Schwierigkeiten z.B. im Schmelzdispergierverhalten, der Kautschukwirkung im Thermoplasten, und dem Aussehen der thermoplastischen Formkörper ergeben, wenn das Pfropfpolymerisatpulver mangelndes Aufschlußverhalten aufweist.

Es wurde nun gefunden, daß man im obigen Sinn einwandfreie Pfropfpolymerisate in Pulverform erhält, wenn man bei ihrer Herstellung Alkylacrylatmonomere bereits bei der Pfropfreaktion mitverwendet. Die erwünschten thermoplastischen Eigenschaften der Pfropfpolymerisate werden nicht nachteilig beeinflußt, wenn man die Alkylacrylate in bestimmten Mengen bei bestimmten thermoplastischen Pfropfpolymerisaten verwendet.

Gegenstand der Erfindung ist ein Verfahren zur Herstellung pulverförmiger, thermoplastischer Pfropfpolymerisate aus

I) 40-80, insbesondere 50-80 Gew.-% eines wenigstens partiell vernetzten Dienkautschuks und
II) 60-20, insbesondere 50-20 Gew.-% der Monomeren Styrol, Acrylnitril, Methylmethacrylat oder Mischungen daraus, das dadurch gekennzeichnet ist, daß man a) die Monomeren (II) in Emulsion und zusammen mit 8-15 Gew.-%, bezogen auf Monomere II, wenigstens eines $C_1$-$C_6$-Alkylacrylates auf den Kautschuk pfropfpolymerisiert, b) die resultierende Pfropfpolymerisatemulsion durch Zusatz von Elektrolyten koaguliert und c) durch Filtration, Waschen und Trocknen zu einem Pulver aufarbeitet.

Ein weiterer Gegenstand der Erfindung sind die so hergestellten Pfropfpolymerisatpulver sowie ihre Verwendung als thermoplastische Formmasse.

Als Kautschuk I enthalten die erfindungsgemäßen Pulver Dienhomo- oder copolymerisate mit Monomeren wie Styrol, Acrylnitril, Methylmethacrylat, Vinylacetat oder Vinylether; sie können teilvernetzt oder hochvernetzt vorliegen und besitzen teilchenförmige Strukturen mit mittleren Teilchendurchmessern ($d_{50}$) von 50-1000, insbesondere 100-600 nm. Bevorzugte Pfropfpolymerisate sind Pfropfprodukte von Styrol, Acrylnitril, Methylmethacrylat oder Mischungen davon auf Dienkautschuke mit Kautschukgehalten, (bezogen auf das Pfropfpolymer), von 40-80 Gew.-%, insbesondere von 50-20 Gew.-%.

Bevorzugte Pfropfpolymerisate werden hergestellt auf der Basis hochvernetzter Kautschuke mit Gelgehalten (als Maß für den Vernetzungsgrad), von größer 50 Gew.-%.

$C_1$-$C_6$-Alkylacrylate im Sinne der Erfindung sind Methyl-, Ethyl-, Propyl-, Butyl-, Pentyl-, Hexylacrylate, insbesondere aber $C_2$-$C_5$-Alkylacrylate.

Die Pfropfpolymerisatpulver können wie folgt hergestellt werden:

Zuerst wird ein als wäßrige Emulsion vorliegender Kautschuk mit Mischungen aus wenigstens einem der Monomeren Styrol, Acrylnitril, Methylmethacrylat und wenigstens einem Alkylacrylat pfropfpolymerisiert, wobei diese Mischung 8-15 Gew.-% Acrylatmonomer enthalten. Die Pfropfpolymerisation, die diskontinuierlich, halbkontinuierlich oder vollkontinuierlich bei Temperaturen von 30-95, insbesondere 55-85 °C durchgeführt wird, muß so gelenkt werden, daß der Umsatz der Monomeren größer 90 %, insbesondere größer 96 % wird. Die Pfropfpolymerisation wird mit radikalischen Initiatoren durchgeführt, insbesondere wasserlöslichen Katalysatoren wie Persulfat, Perphosphat, Peroxid, Hydroperoxid, Azoverbindung, Perester, gegebenenfalls in Kombination mit Cokatalysatoren. Der pH-Wert der Emulsionen kann für die Qualität der Pfropfpolymerisate ausschlaggebend sein, vorzugweise arbeitet man bei pH-Werten von 12-2, insbesondere 11-3.

Je nach Art und Menge der eingesetzten Kautschuk- und Monomerkomponenten können gegebenenfalls Emulgatoren zur Pfropfpolymerisation eingesetzt werden bevorzugt anionische Emulgatoren wie höhere Carbonsäuresalze, Sulfonsäuresalze oder Sulfonate.

Die anfallenden Pfropfpolymerlatices besitzen Polymerfeststoffgehalte von 20-60 Gew.-%, insbesondere von 25-45 Gew.-%, und sind lager- und scherstabil.

Diese Emulsionen können gegebenenfalls entgast und stabilisiert werden, z.B. durch Zusatz phenolischer Antioxidantien.

Zur Isolierung der Pfropfpolymerisate aus der Emulsionen werden diese mit Elektrolytlösungen koaguliert. Wirksame Elektrolyte sind wasserlösliche Alkali-, Erdalkali- und Aluminiumsalze z.B. Chloride, Sulfate, Phosphate, Acetate und/oder Mineralsäuren und organische, wasserlösliche Carbonsäuren. Die Elektrolyte werden in Mengen bis zu 40 Gew.-%, insbesondere bis zu 20 %, bezogen auf zu koagulierendes Pfropfpolymerisat, eingesetzt, wobei bei höheren Temperaturen, insbesondere von 50-100 °C gearbeitet wird.

Nach vollständiger Koagulation der Emulsion wird der anfallende Polymerisatbrei filtriert oder in Schleudern entwässert. Dabei kann gleichzeitig oder anschließend mit Wasser gewaschen werden, bis das Polymerisat den erforderlichen Reinheitsgrad aufweist.

Nach mechanischer Entwässerung (Filtration, Zentrifugation, Druckfiltration); kann das resultierende Feuchtgut in Luft oder unter Inertgas, unter Normaldruck oder im Vakuum bei Temperaturen von 40-200 °C, insbesondere 70-160 °C soweit getrocknet werden, daß Polymerpulver mit Restwassergehalten kleiner 3 Gew.-%, insbesondere kleiner 1,5 Gew.-% erhalten werden. Diese können zu thermoplastischen Formmassen weiterverarbeitet werden. Vorzugsweise können solche Pulver mit thermoplastischen Harzen wie SAN, PVC, Polycarbonat, Polyamid, Polyester, Polystyrol schmelzcompoundiert und zu Formkörpern verarbeitet werden, die aufgrund der Pfropfpolymerisatkomponente verbesserte Schlagzähigkeit aufweisen.

Das Verfahren der Erfindung weist folgende Vorteile auf: Im Vergleich zur entsprechenden Pfropfpolymerisation ohne Alkylacrylatzusatz findet man bessere Entwässerung und effektivere Reinigung beim Waschen. Die weitere Trocknung ist somit besonders einfach und schnell. Aufgrund der besseren Reinheit der Produkte und der kürzeren Trocknung besitzen die Polymerisate erhöhte Thermostabilität. Auch ihre Wirkung auf harzartige thermoplasten ist verbessert. Dieser Effekt kann u.a. auf den Reinheitsgrad sowie auf eine spezielle Pulverkornstruktur zurückgeführt werden; dafür sprechen auch die verbesserte Rieselfähigkeit und Lagerbeständigkeit (Silierfähigkeit) der erfindungsgemäßen Pulver.

Beispiele

I) Eingesetzter Kautschuk:

1) Polybutadienlatex, hergestellt durch wäßrige Emulsionspolymerisation, mit einem Feststoffgehalt von 44.3 Gew.-%, einem mittleren Teilchendurchmesser ($d_{50}$-Wert) von 0,4 $\mu$m und einem Gelgehalt von 86,5 Gew.-%.

(II) Herstellung der Polybutadienpfropfpolymeremulsionen (Pfropfpolymer mit 50 % Kautschuk)

In einem Reaktor wird Latex I.1) vorgelegt, so daß 750 Gew.-Tl. Kautschuk eingesetzt werden. Anschließend verdünnt man jeweils mit soviel Wasser, bis sich ein Polymerfeststoffgehalt von 23,6 Gew.-% eingestellt hat. Bei einer Temperatur von 64-66 °C startet man die Polymerisation durch Zugabe einer Lösung von 7,5 Gew.-Tl. Kaliumperoxidisulfat in 195 Gew.-Tl. Wasser.

3

Danach werden folgende Mengenströme bei 64-66°C unter Rühren innerhalb von 4 h gleichmäßig in den Reaktor eindosiert:

| 1) | 750 Gew.-Tl. | Monomermischung der Zusammensetzung aus Tabelle 1 |
|----|--------------|---------------------------------------------------|
| 2) | 375 Gew.-Tl.<br>15 Gew.-Tl.<br>11,5 Gew.-Tl. | Wasser<br>Na-Salz der disproportionierten Abietinsäure<br>1-n-Natronlauge |

Nach Beendigung der Zudosierung wird noch bei 65°C nachpolymerisiert. Die Stabilisierung des Latex erfolgt mit 1,6 Gew.-% phenolischen Antioxidantien.

Herstellung der Polybutadienpfropfpolymeremulsionen (Pfropfpolymere mit 80 % Kautschuk)

In einem Reaktor wird Latex I.1) vorgelegt, so daß 1184 Gew.-Teile Kautschuk eingesetzt werden. Anschließend verdünnt man jeweils weiter mit soviel Wasser, bis sich ein Polymerfeststoffgehalt von 36,2 Gew.-% eingestellt hat. Bei einer Temperatur von 62-70°C startet man die Polymerisation durch Zugabe einer Lösung von 3,5 Gew.-Teilen Kaliumperoxodisulfat in 100 Gew.-Teilen Wasser. Danach werden folgende Mengenströme bei 65-70°C unter Rühren innerhalb von 4 Stunden gleichmäßig in den Reaktor eindosiert.

| 1) | 300 Gew.-Teile | Monomermischung der Zusammensetzung aus Tabelle 1 |
|----|----------------|---------------------------------------------------|
| 2) | 410 Gew.-Teile<br>29 Gew.-Teile<br>22 Gew.-Teile | Wasser<br>Na-Salz der disproportionierten Abietinsäure<br>1-n-Natronlauge |

Nach Beendigung der Zudosierung wird noch bei 65°C nachpolymerisiert. Die Stabilisierung des Latex erfolgt mit 1,6 Gew.-% phenolischen Antioxidantien.

III) Aufarbeitung der Pfropfpolymeremulsionen zu Pulvern

Die Pfropfpolymerlatices aus Tabelle 1 werden folgendermaßen koaguliert: In einer auf 80-90°C aufgeheizten Lösung von

T a b e l l e  1   Hergestellte Pfropfpolymeremulsionen

| Nr. | Zusammensetzung der Pfropfmonomeren | | | | | | Kautschukgehalt / Pfropfmonomergehalt |
|---|---|---|---|---|---|---|---|
| II.1 | 28 | ACN | 72 | S | | | 50 / 50 |
| II.2 | 25,2 | ACN | 64,8 | S | 10 | nBA | 50 / 50 |
| II.3 | 23,8 | ACN | 61,2 | S | 15 | nBA | 50 / 50 |
| II.4 | 100 | MMA | | | | | 80 / 20 |
| II.5 | 90 | MMA | | | 10 | nBA | 80 / 20 |
| II.6 | 85 | MMA | | | 15 | nBA | 80 / 20 |

ACN = Acrylnitril
S   = Styrol
MMA = Methylmethacrylat
nBA = n-Butylacrylat
HA  = Hexylacrylat

100 Gew.-Teile MgSO$_4$xH$_2$O
100 Gew.-Teile Essigsäure
5000 Gew.-Tl. Wasser

Wird innerhalb 1 Stunde soviel Latex eindosiert, daß in der Mischung 1000 Gew.-Tl. Polymerisatfeststoff vorliegen. (Im Falle der Produkte II.7-II.9 werden anstatt 100 Gew.-Tl. 200 Gew.-Tl. MgSO$_4$xH$_2$O und keine Essigsäure eingesetzt). Anschließend wird 30 Min. bei 95°C nachgerührt. Nach Abkühlen auf 40-50°C werden die Mischungen in einer Zentrifuge mit einem Durchmesser von 40 cm und einer Umdrehung von 3000 U/Min. zentrifugiert, mit Wasser elektrolytfrei gewaschen und anschließend 10 Min. trockengeschleudert. Der Wassergehalt des isolierten Feuchtgutes wird durch Verdamfung und Gravimetrische Bestimmung ermittelt.

Das Feuchtgut wird bei 70°C bis auf eine Restfeuchte kleiner 1 % getrocknet.

III) Eigenschaften der Pfropfpolymerisate

Tabelle 2

| Entwässerungsverhalten | |
|---|---|
| Nr. | Restwasser des Feuchtgutes nach Schleuderung (Gew.-%) |
| II.1 | 42 |
| II.2 | 34 |
| II.3 | 30 |
| II.4 | 59 |
| II.5 | 42 |
| II.6 | 39 |

Wie ersichtlich, wird durch die Anwesenheit des Alkylacrylates in den Pfropfpolymeren das Entwässerungsverhalten drastisch verbessert.

Formmasseneigenschaften

Die Polymerisate aus den Latices II.1 und II.2 werden mit einem SAN-Harz mit einem S/ACN-Verhältnis von 72/28 und einer Grenzviskosität von [$\pi$] = 0,55 dl/g (in DMF bei 20°C) und einem Polycarbonat auf Basis Bishpenol A mit einer relativen Lösungsviskosität $\pi_{rel}$ von 1,26-1,28 (in CH$_2$Cl$_2$ bei 25°C in einer Konzentration von 0,5 g/100 ml) vermischt: Mischungsverhältnis:

60 Gew.-Teile Polycarbonat
16 Gew.-Teile SAN
24 Gew.-Tl. Pfropfpolymer

Die Compoundierung der Komponenten erfolgte auf einem 3 l Innenkneter bei Temperaturen von 200 bis 220°C.

Die Herstellung von Formkörpern erfolgte, soweit nicht anders angegeben, auf einer Spritzgießmaschine bei 260°C. Die Bestimmung der Kerbschlagzähigkeit erfolgte nach Methode Izod an Stäben der Abmessung 2,5 x 0,5 x 0,125" gemäß ASTM-D-256 bei RT, -20°C, - 40°C.

T a b e l l e   3   Formmasseneigenschaften

| auf Basis Pfropfpolymer | Kerbschlagzähigkeit nach Izod I/m | | |
|---|---|---|---|
| | RT | $-20^o$ C | $-40^o$ C |
| auf Basis Pfropfpolymer II.1 | 584 | 490 | 398 |
| auf Basis Pfropfpolymer II.2 | 738 | 612 | 544 |

Die Formmassen (Tabelle 3) auf der Basis des Pfropfpolymerisates im Sinne der Erfindung (II.2) führen zu Thermoplastformmasen erhöhter Zähigkeit.

**Patentansprüche**

1. Verfahren zur Herstellung pulverförmiger, thermoplastischer Pfropfpolymerisate aus
   I) 40-80 Gew.-% eines wenigstens partiell vernetzten Dienkautschuks und
   II) 60-20 Gew.-% der Monomeren Styrol, Acrylnitril, Methylmethacrylat oder Mischungen daraus,
   dadurch gekennzeichnet, daß man a) die Monomeren (II) in Emulsion und zusammen mit 8-15 Gew.-%, bezogen auf Monomer (II), wenigstens eines $C_1$-$C_6$-Alkylacrylates auf den Kautschuk pfropfpolymerisiert, b) die resultierende Pfropfpolymerisatemulsion durch Zusatz von Elektrolyten koaguliert und c) durch Filtration, Waschen und Trocknen zu einem Pulver aufarbeitet.

2. Pfropfpolymerisatpulver, hergestellt nach Anspruch 1.

3. Verwendung der nach Anspruch 1 erhaltenen Pfropfpolymerisate als thermoplastische Formmasse.

**Claims**

1. A process for the production of powder-form thermoplastic graft polymers of
   I) 40 to 80% by weight of an at least partly crosslinked diene rubber and
   II) 60 to 20% by weight of the monomers styrene, acrylonitrile, methyl methacrylate or mixtures thereof,
   characterized in that a) the monomers (II) are emulsion graft-polymerized onto the rubber together with 8 to 15% by weight, based on monomer (II), of at least one $C_{1-6}$ alkyl acrylate, b) the resulting graft polymer emulsion is coagulated by addition of electrolytes and c) is worked up to a powder by filtration, washing and drying.

2. A graft polymer powder produced by the process claimed in claim 1.

3. The use of the graft polymers obtained by the process claimed in claim 1 as thermoplastic moulding compounds.

**Revendications**

1. Procédé de production de polymères greffés thermoplastiques en poudre constitués de :
   I) 40 à 80 % en poids d'un diène au moins partiellement réticulé et
   II) 60 à 20 % en poids des monomères styrène, acrylonitrile, méthacrylate de méthyle ou leurs mélanges, caractérisé en ce que a) on polymérise par greffage les monomères (II) en émulsion ou conjointement avec 8 à 15 % en poids, par rapport au monomère (II), d'au moins un acrylate d'alkyle en $C_1$ à $C_6$ sur le caoutchouc, b) on coagule l'émulsion de polymère greffé résultante par addition d'électrolytes et c) on traite finalement le produit par filtration, lavage et séchage en une poudre.

2. Polymère greffé en poudre, produit selon la revendication 1.

3. Utilisation des polymères greffés obtenus selon la revendication 1 comme matière à mouler thermo-plastique.